# EUROPÄISCHE PATENTANMELDUNG

(11) **EP 4 570 476 A1**
(43) Veröffentlichungstag der Anmeldung: **18.06.2025**
(21) Anmeldenummer: 24212573.0
(22) Anmeldetag: 13.11.2024
(51) Int. Cl.: B29C 53/58, B29C 53/60, B29D 23/00, B29C 63/34

(54) **VERFAHREN UND VORRICHTUNG ZUR HERSTELLUNG EINES GEWICKELTEN AUSKLEIDUNGSSCHLAUCHS**

(30) Priorität: 11.12.2023 DE 102023134606; 19.06.2024 DE 102024117237
(71) Anmelder: Brandenburger Liner GmbH & Co. KG, 76829 Landau/Pfalz (DE)
(72) Erfinder: Brandenburger, Tím, 76829 Landau (DE)
(74) Vertreter: Kesselhut, Wolf

(57) **Zusammenfassung**

Ein Verfahren zur Herstellung eines Auskleidungsschlauchs (1) mit einem integralen, bevorzugt mit Filz oder Vlies kaschierten, umfänglich geschlossenen Innenfolienschlauch (2) und einer darauf angeordneten, mit einem härtbaren Reaktionsharz getränkten Faserbandlage (4) zur Auskleidung von Kanälen und Druck- und/oder Trinkwasserleitungen, zeichnet sich durch die folgenden Verfahrensschritte aus:
Einführen eines Dorns (6) mit einer daran angeordneten Wickelzunge (8) in ein erstes vorlaufendes Ende des Innenfolienschlauchs (1), p
Anordnen des Dorns (6) mit dem diesen umgebenden Innenfolienschlauch (2) auf den Lagern (12), insbesondere Gleitflächen oder Rollen einer Führungsbahn (10) für den Innenfolienschlauch (2),
Bewegen des Innenfolienschlauchs (2) mittels einer Transportvorrichtung (12) über den Dorn (6) und die Wickelzunge (8),
Erzeugen einer magnetischen Kraft (F) zwischen dem im Inneren des Innenfolienschlauchs (2) angeordneten Dorn (6) und einer außerhalb des Innenfolienschlauchs (2) angeordneten magnetischen Haltevorrichtung (14), wobei die Haltevorrichtung (14) dazu eingerichtet ist, den Dorn (6) in einer axialen Position zu fixieren und/oder den Dorn (6) gegen die Lager (12), insbesondere die Gleitflächen und/oder Rollen der Führungsbahn (10) zu drängen, während der Innenfolienschlauch (2) über diesen hinweg bewegt wird, und
überlappendes schraubenförmiges Umwickeln des fortlaufend über den Dorn (6) und die Wickelzunge (8) bewegten Innenfolienschlauchs (2) mit wenigstens einem harzgetränkten Faserband (4a). Die Erfindung betrifft weiterhin eine Vorrichtung zur Durchführung des Verfahrens.

## Beschreibung

Die Erfindung betrifft ein Verfahren und eine Vorrichtung zur Herstellung eines gewickelten Auskleidungsschlauchs, insbesondere eines GFK-Liners, zur grabenlosen Kanalsanierung auf Basis einer gefügten, d. h. zu einem Schlauch mit einer Längsnaht geformten, auf der Außenseite mit einer bevorzugt aufkaschierten Vlieslage versehenen Innenfolie, wie sie z.B. in der EP 2 641 005 B1 beschrieben ist, oder einer endlos gefertigten, eine äußere Vlieslage aufweisenden schlauchförmigen Innenfolie, wobei beide Arten zum Verbleib im sanierten Altrohr bestimmt sind.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionsharz getränkt ist, das nach dem Einziehen des Auskleidungsschlauchs in die defekte Rohrleitung und Expandieren desselben mit Hilfe von Druckluft durch Licht einer Strahlungsquelle ausgehärtet wird.

Bei den in der EP 2 641 005 B1 beschriebenen Auskleidungsschläuchen wird der mit einem Vlies kaschierte Innenfolienschlauch auf den die Faserbänder aufgewickelt werden durch ein überlappendes Legen der Folienränder einer mit Vlies kaschierten Folienbahn und Aufschweißen eines Folienbandes fortlaufend erzeugt, was jedoch produktionstechnisch hohe Anforderungen stellt. Obgleich sich umfänglich geschlossene, mit Vlies kaschierte Innenfolienschläuche in nahezu unbegrenzter Länge fertigen und für eine Weiterverarbeitung zu einem Wickel zusammenrollen lassen, ist es mit den bisher bekannten Herstellungsvorrichtungen, wie sie z.B. in der WO 1 995004646A1 der Anmelderin beschrieben sind, nicht möglich, diese Innenfolienschläuche im Endlosverfahren zu einem Auskleidungsschlauch beliebiger Länge zu verarbeiten. Dies ist darauf zurück zu führen, dass sich die Schläuche im Gegensatz zu unkaschierten Folienschläuchen aufgrund der Wandstärke und Steifigkeit der Vlieslage nicht ohne die Gefahr von Beschädigungen auf die in den Wickelvorrichtungen eingesetzten Halterohre aufstrippen lassen, die konstruktionsbedingt nur eine endliche Länge besitzen.

Demgemäß ist es eine Aufgabe der vorliegenden Erfindung, ein Verfahren und eine Vorrichtung zur Herstellung eines einfachen und robusten Auskleidungsschlauchs mit einem integralen, insbesondere mit Filz oder Vlies kaschierten Innenfolienschlauch und einer darauf angeordneten, bevorzugt spiralförmig gewickelten, oder auch gelegten, mit einem flüssigen härtbaren Reaktionsharz getränkten Faserbandlage zur Auskleidung von Druck- und/oder Trinkwasserleitungen zu schaffen, bei welchem der Innenfolienschlauch nach der Aushärtung des Reaktionsharzes im Rohr verbleiben kann und die eigentliche Verschleißschutzschicht bildet.

Diese Aufgabe wird durch ein Verfahren mit den Merkmalen von Anspruch 1 sowie eine Vorrichtung mit den Merkmalen von Anspruch 7 gelöst.

Gemäß der Erfindung zeichnet sich ein Verfahren zur Herstellung eines Auskleidungsschlauchs mit einem integralen, bevorzugt mit Filz oder Vlies kaschierten, umfänglich geschlossenen Innenfolienschlauch und einer darauf angeordneten, mit einem härtbaren Reaktionsharz getränkten Faserbandlage zur Auskleidung von Kanälen und Druck- und/oder Trinkwasserleitungen, durch die folgenden Verfahrensschritte aus:
- Einführen eines Dorns mit einer daran angeordneten Wickelzunge in ein erstes vorlaufendes Ende des Innenfolienschlauchs,
- Anordnen des Dorns mit dem diesen umgebenden Innenfolienschlauch auf den Lagern, insbesondere Gleitflächen oder Rollen, einer Führungsbahn für den Innenfolienschlauch,
- Bewegen des Innenfolienschlauchs mittels einer Transportvorrichtung über den Dorn und die Wickelzunge,
- Erzeugen einer magnetischen Kraft zwischen dem im Inneren des Innenfolienschlauchs angeordneten Dorn und einer außerhalb des Innenfolienschlauchs angeordneten magnetischen Haltevorrichtung, wobei die Haltevorrichtung dazu eingerichtet ist, den Dorn in einer axialen Position zu fixieren und/oder den Dorn gegen die Gleitflächen und/oder Rollen der Führungsbahn zu drängen, während der Innenfolienschlauch über diesen hinwegbewegt wird, und
- überlappendes schraubenförmiges Umwickeln des fortlaufend über den Dorn und die Wickelzunge bewegten Innenfolienschlauchs mit wenigstens einem harzgetränkten Faserband zu einem umfänglich geschlossenen Auskleidungsschlauch.

Der Vorschub des Innenfolienschlauchs erfolgt dabei bevorzugt durch ein der Wickelzunge nachgeordnetes Transportband, das durch einen Motor, bevorzugt Elektromotor und eine zugehörige Steuerungseinrichtung angetrieben wird.

Nach einem weiteren der Erfindung zugrunde liegenden Gedanken sind die Stärke und bevorzugt auch die Richtung der magnetischen Anziehungskraft, die zwischen der magnetischen Haltevorrichtung und dem Dorn wirkt, veränderbar. Hierdurch ergibt sich der Vorteil, dass die Haltekräfte bei Auskleidungsschläuchen mit kleinen Durchmessern reduziert werden können, was eine Verringerung der auf den Innenfolienschlauch wirkenden Reibungskräfte und damit der mechanischen Beanspruchung des Innenfolienschlauchs ermöglicht. Demgegenüber ermöglicht es eine Veränderung der Richtung der magnetischen Anziehungskraft, insbesondere eine Umkehrung der Kräfte, den Abstand zwischen der magnetischen Haltevorrichtung und dem Dorn aktiv zu vergrößern, was zu einer erheblichen Erleichterung beim Einfädeln eines neuen Innenfolienschlauchs in die Vorrichtung führt.

Der Innenfolienschlauch wird bevorzugt als Wickel bereitgestellt und von einer bevorzugt motorisch angetriebenen Abrollvorrichtung zugeführt, die in vorteilhafter Weise mit einem veränderbaren Bremsmoment beaufschlagt werden kann, um insbesondere die auf den Innenfolienschlauch bei der Produktion des Auskleidungsschlauchs ausgeübte Zugspannung zu verändern, sodass der Innenfolienschlauch einerseits nicht überdehnt wird, und andererseits keine Falten entstehen, die bei dem sich anschließenden Wickelvorgang leicht zu nachteiligen Lufteinflüssen zwischen dem Innenfolienschlauch und den an diesem anliegenden harzgetränkten Faserbändern führen können.

Um die zwischen dem Dorn und dem Innenfolienschlauch wirkenden Reibungskräfte insgesamt weiter zu verringern, kann der Innenfolienschlauch nach einer weiteren Ausführungsform der Erfindung am stromabwärtigen Ende der Wickelzunge über eine oder mehrere im Inneren des Innenfolienschlauchs an der Spitze der Wickelzunge, bevorzugt entlang einer Reihe angeordnete Rollen geführt werden.

Weiterhin kann es vorgesehen sein, dass um die Außenseite der gewickelten Faserbandlage herum ein bevorzugt lichtdichter, insbesondere für UV-Licht undurchlässiger Außenfolienschlauch, der auf seiner Innenseite bevorzugt mit einer Vlieslage versehen ist, angeordnet wird. Dieser wird bevorzugt durch fortlaufendes thermisches Verschweißen von bahnförmigem für UV-Licht undurchlässigem, mit Vlies kaschiertem Folienmaterial erzeugt und bevorzugt in Höhe des Dorns aufgebracht. Der Außenfolienschlauch ermöglicht es, den Auskleidungsschlauch ohne zusätzliche Vorkehrungen auch bei Tage zu transportieren und über einen Kanalschacht in den zu sanierenden Kanal einzuziehen, ohne dass die mit einem lichtempfindlichen Reaktionsharz getränkten Faserbandlagen frühzeitig aushärten. Der Außenfolienschlauch und stellt ferner im Falle einer Vlieskaschierung auf seiner Innenseite sicher, dass Ausbrüche in der Kanalinnenwand beim Expandieren des Auskleidungsschlauchs zuverlässig überspannt werden, ohne das Fasermaterial übermäßig auszubeulen.

Nach einem weiteren der Erfindung zugrunde liegenden Gedanken umfasst eine Vorrichtung zur Durchführung des erfindungsgemäßen Verfahrens eine Führungsbahn für einen Innenfolienschlauch, die durch eine Vielzahl von Lagern, insbesondere Gleitflächen oder Rollen, definiert ist, welche an ortsfesten, im Abstand zueinander angeordneten Trageinrichtungen aufgenommen sind und die Führungsbahn an ihrer Unterseite begrenzen. Die Vorrichtung besitzt weiterhin einen langgestreckten Dorn mit wenigstens einem darin enthaltenden Magneten oder Bereich aus magnetisierbarem Material und eine am Dorn befestigte Wickelzunge, die dazu eingerichtet sind, im Inneren eines umfänglich geschlossenen Innenfolienschlauchs aufgenommen zu werden.

Die Vorrichtung enthält weiterhin eine Transportvorrichtung, die dazu eingerichtet ist, den Innenfolienschlauch über den Dorn und die Wickelzunge zu bewegen.

Gemäß der Erfindung weist die Vorrichtung eine nahe der Führungsbahn angeordnete magnetische Haltevorrichtung auf, die dazu eingerichtet ist, den Dorn mit einer magnetischen Haltekraft zu beaufschlagen, um diesen während der Bewegung des Innenfolienschlauchs relativ zur Führungsbahn im Wesentlichen ortsfest zu positionieren. Weiterhin umfasst die Vorrichtung eine Wickelvorrichtung, die um die Wickelzunge herum angeordnet ist. Diese ist dazu eingerichtet, den Innenfolienschlauch während seiner Bewegung mit wenigstens einem harzgetränkten Faserband überlappend zu umwickeln, während dieser über den Dorn und die Wickelzunge bewegt wird, sodass sich eine umfänglich geschlossene Lage aus Fasermaterial bildet, welches in bekannter Weise mit einem durch UV-Lichthärtbaren Reaktionsharz getränkt ist. Das Reaktionsharz wird in bekannter Weise nach dem Einziehen des Auskleidungsschlauchs durch Hindurchführen einer UV-Strahlungsquelle in den Innenraum des Innenfolienschlauchs ausgehärtet. Die Erfindung umfasst jedoch ebenfalls die Möglichkeit, das Faserbandmaterial mit einem thermisch härtbaren Reaktionsharz zu tränken, so dass der Auskleidungsschlauch im Kanal oder dem Druckrohr alternativ auch durch Einleiten von Heißwasser ausgehärtet werden kann.

Bei einer bevorzugten Ausführungsform der Erfindung umfasst die magnetische Haltevorrichtung wenigstens einen Elektromagneten, der an der Unterseite der Führungsbahn zwischen zwei den Dorn tragenden Lagern, insbesondere zwischen zwei Gleitflächen oder Rollen, angeordnet ist. Dieser ist dazu eingerichtet, den Dorn mit einer magnetischen Kraft zu beaufschlagen, welche diesen gegen die Lager drängt, welche den Dorn tragen.

Bei einer bevorzugten Ausführungsform der erfindungsgemäßen Vorrichtung ist die von dem wenigstens einen Elektromagneten erzeugte, auf den Dorn ausgeübte Magnetkraft durch eine elektronische Steuerungseinrichtung in Ihrer Stärke und/oder Richtung veränderbar, die hierzu den Stromfluss durch den wenigstens einen Elektromagneten steuert, bzw. regelt.

Nach einem weiteren der Erfindung zugrunde liegenden Gedanken sind die Außenflächen des Dorns sowie bevorzugt auch der Wickelzunge, welche dazu eingerichtet sind, die Innenseite des Innenfolienschlauchs während des Vorschubs desselben zu kontaktieren, mit einem reibungsvermindernden Werkstoff, insbesondere Filz oder Kunststoff, belegt oder beschichtet. Hierbei kann es vorgesehen sein, dass im Bereich der Außenflächen, die die die Innenseite des Innenfolienschlauchs kontaktieren, zusätzliche Rollen angeordnet sind, welche durch Öffnungen hindurchtreten, die in den Außenflächen des Dorns geformt sind. Der Dorn ist im Inneren bevorzugt hohl, um das Gewicht weiter zu reduzieren.

Die Erfindung wird nachfolgend mit Bezug auf die zugehörigen Zeichnungen beschrieben. In den Zeichnungen zeigen:
- Fig. 1a: eine schematische Seitenansicht einer erfindungsgemäßen Vorrichtung ohne Innenfolienschlauch,
- Fig. 1b: die Vorrichtung von Fig.1a mit Innenfolienschlauch bei der Herstellung eines erfindungsgemäßen Auskleidungsschlauchs,
- Fig. 2a: eine schematische Querschnittsansicht des Dorns, der gemäß einer ersten Ausführungsform der Führungsbahn auf Gleitflächen gelagert ist,
- Fig. 2b: eine schematische Querschnittsansicht des Dorns, der gemäß einer zweiten Ausführungsform der Führungsbahn auf Rollen gelagert ist,
- Fig. 2c: eine schematische Querschnittsansicht des Dorns von Fig. 2b, der sich durch an diesem aufgenommene Rollen auf den Rollen der Führungsbahn abstützt,
- Fig. 3: eine schematische Seitenansicht einer bevorzugten Ausführungsform der Wickelzunge,
- Fig. 4a: eine Querschnittsansicht des Dorns und der diesen tragenden Führungsbahn
- Fig. 4b: einen schematischen Längsschnitt durch den Dorn mit der darunter angeordneten Magnethalterung, und
- Fig. 5: den Aufbau des fertigen ausgehärteten Auskleidungsschlauchs.

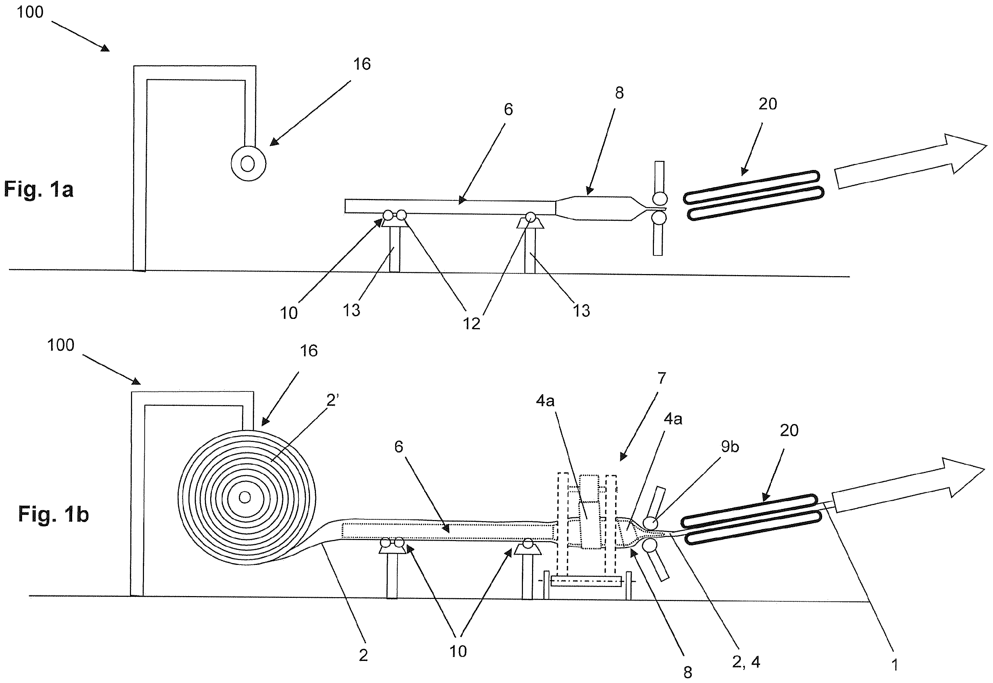

Wie in den Figuren 1a und 1b gezeigt ist, trägt eine bevorzugt durch eine nicht näher gezeigte elektronische Steuerungseinrichtung gesteuerte Rollenhalterung/Abrollvorrichtung 16 den vorgefertigten, bevorzugt zu einem Wickel 2' aufgewickelten Innenfolienschlauch 2 und stellt diesen dem Fertigungsprozess zur Verfügung. Dazu wird ein gesteuertes Drehmoment aufgebracht, mit dem ausreichend Schub, d.h. eine ausreichend große Vortriebskraft vorgegeben wird, so dass sich der Innenfolienschlauch 2 aus der aufgewickelten, flachen Form aufstellen und auf den Dorn 6 der erfindungsgemäßen Vorrichtung 100 auffädeln kann.

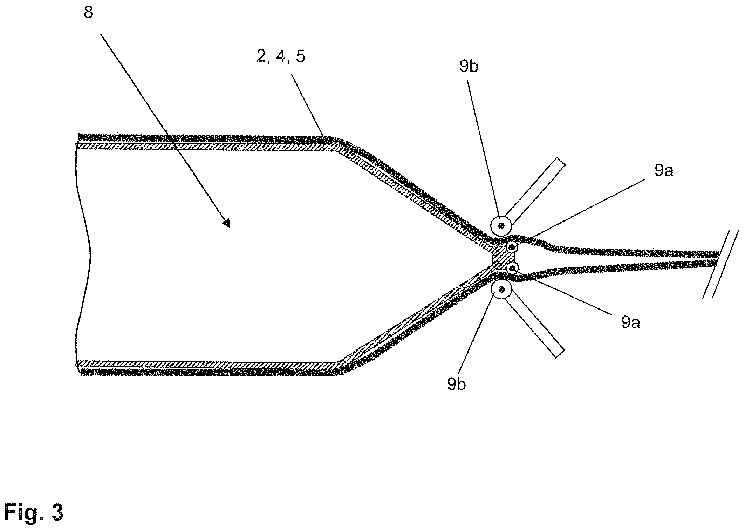

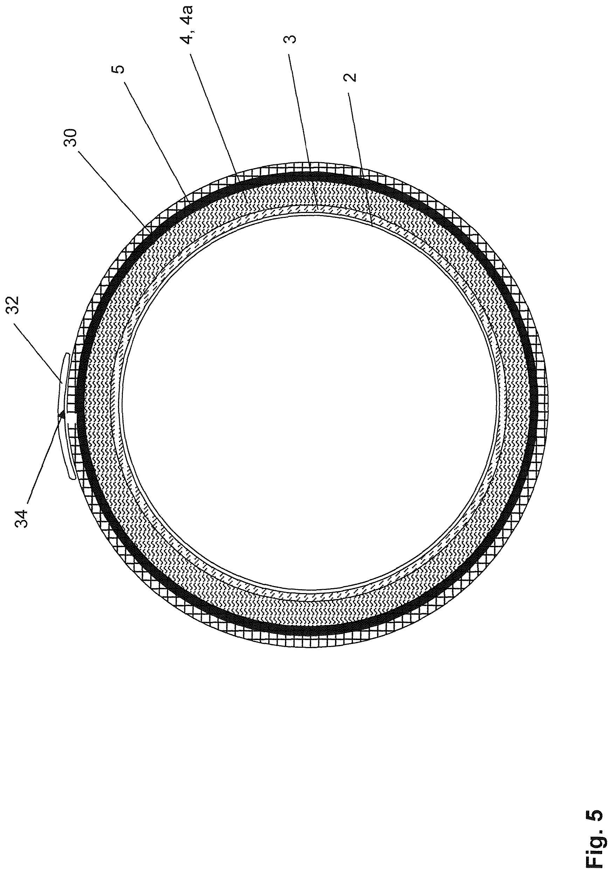

Der vorgefertigte Innenfolienschlauch 2, der nachfolgend auch als Innenschlauch bezeichnet wird, wird durch eine Transportvorrichtung 20 die gemäß der Darstellung von Figur 1a und 1b beispielhaft durch zwei Transportbänder symbolisiert wird, durch den Produktionsraum gezogen. Über eine am Ende des Dorns 6 angeordnete, in den Figuren 1a, 1b und 3 gezeigte Wickelzunge 8 werden die überlappenden schraubenförmigen Wicklungen aus getränktem Glasfaserband 4a mit Hilfe einer Wickelvorrichtung 7 aufgebracht, die eine umfänglich geschlossene Faserbandlage 4 im Auskleidungsschlauch 1 bilden, welche im Zusammenhang mit dem fertig eingezogenen und ausgehärteten Auskleidungsschlauch 1 schematisch auch in Figur 5 angedeutet ist. Eine hierzu geeignete Wickelvorrichtung 7 ist beispielsweise in der WO1995004646A1 der Anmelderin beschrieben. Die Wickelzunge 8 ist mit dem Dorn 6 bevorzugt lösbar verbunden und wird durch diesen verlängert und in Position gehalten.

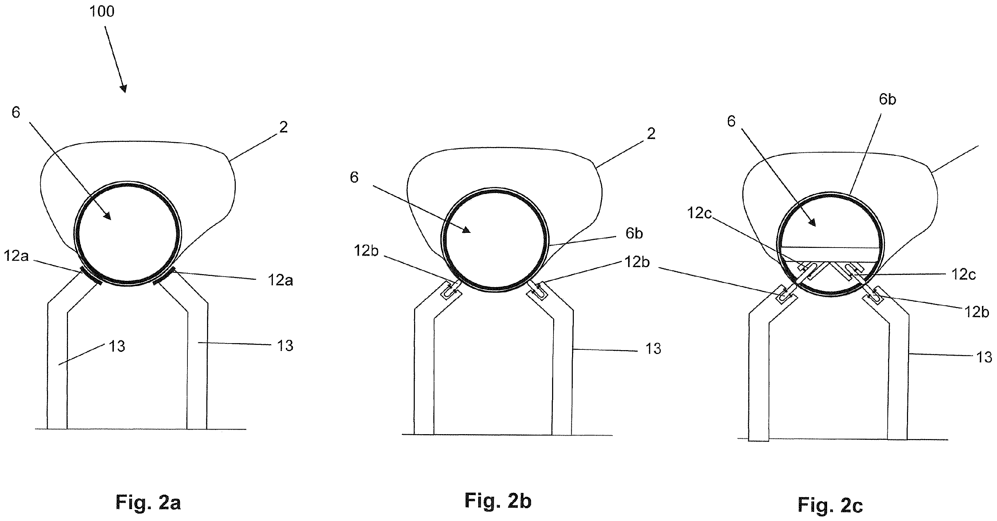

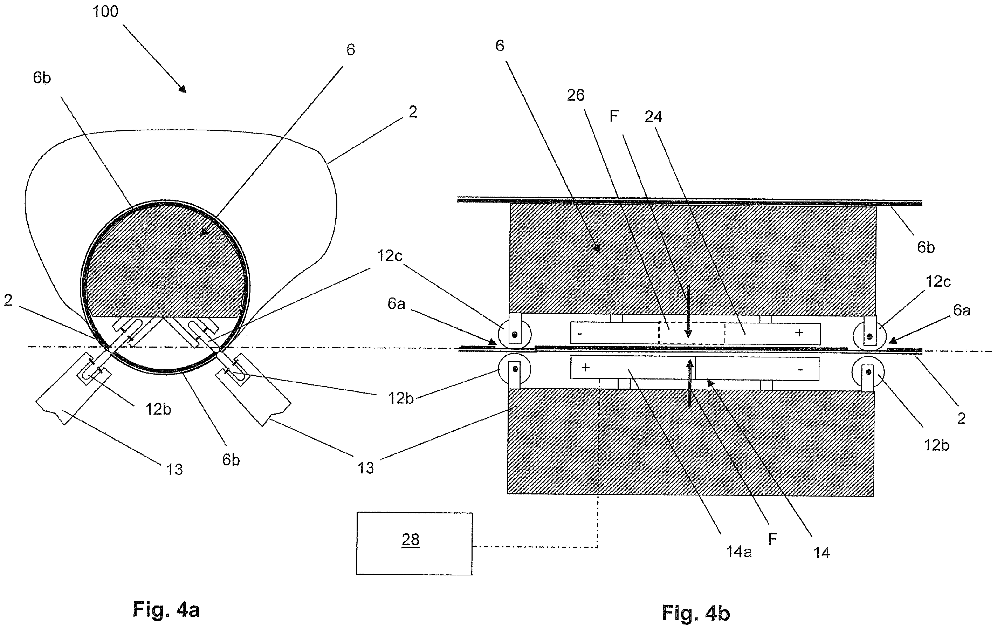

Wie der Darstellung von Fig. 2c und 4a entnommen werden kann, liegt der Dorn 6 in bevorzugt winkelig angeordneten Lagern 12, die an Trageinrichtungen 13 aufgenommen sind und eine Führungsbahn 10 für den Innenfolienschlauch 2 bilden. Zwischen diesen Lagern 12 und dem Dorn 6 wird der Innenfolienschlauch 2 hindurchgezogen. Um die dabei auftretenden Zugkräfte klein zu halten, erfolgt die Lagerung des vorgefertigten Innenfolienschlauchs 2 in den Lagern 12 gemäß einer in den Figuren 2a bis 2c gezeigten und nachfolgend näher beschriebenen Ausführungsformen.

So können die Lager, die eine Führungsbahn für den Innenfolienschlauch bilden, in einer ersten, in Fig. 2a gezeigten Ausführungsform Gleitflächen 12a umfassen, die an der Oberseite von ortsfest angeordneten Trageinrichtungen 13 der Führungsbahn 10 angeordnet sind, wie z.B. den gezeigten Ständern oder Stützen. Die Gleitflächen 12a sind bevorzugt mit einem reibungsvermindernden Werkstoff belegt, beispielsweise mit Teflon oder einem anderen bekannten Kunststoff mit einem geringen Gleitreibungskoeffizienten.

Gleichzeitig oder alternativ können die Lager der Führungsbahn 10 gemäß einer weiteren, in Fig. 2b gezeigten Ausführungsform durch bevorzugt im Winkel an den Trageinrichtungen 13 der Führungsbahn 10 unterstützend angeordnete Rollen oder Rollräder 12b gebildet werden, die eine als Rollenbahn ausgeführte Führungsbahn 10 definieren, die an der Unterseite des Innenfolienschlauchs 2 angeordnet ist. Auf dieser stützen sich der Innenfolienschlauch 2 selbst, sowie auch der im Inneren des Innenfolienschlauchs 2 angeordnete Dorn 6 ab.

Bei den zuvor beschriebenen beiden Ausführungsformen weist der im Inneren des Innenfolienschlauchs 2 angeordnete Dorn 6 bevorzugt ebenfalls eine die Reibung reduzierende Außenoberfläche auf, wozu dieser bevorzugt mit einem Filz oder einem Kunststoffmaterial, z.B. einer Kunststofffolie, belegt, bzw. ummantelt sein kann, wie dies in Fig. 2 angedeutet ist.

Um die auf den Dorn 6 im Inneren des Innenfolienschlauchs 2 bei dessen Vorschub wirkenden Reibungskräfte weiter zu verringern, kann es gleichzeitig oder alternativ zum Einsatz eines auf die Außenoberfläche des Dorns 6 aufgebrachten, reibungsvermindernden Werkstoffs, bzw. der Rollenbahn aus außerhalb des Innenfolienschlauchs 2 angeordneten Rollen 12b vorgesehen sein, im Inneren des Dorns 6 weitere Rollen 12c anzuordnen, die, wie in Fig. 2c gezeigt, in axialer Richtung auf Höhe der außen liegenden Rollen 12b am Dorn 6 angeordnet sind und sich drehbar an diesem abstützen, sodass der Innenfolienschlauch 2 zwischen den innenliegenden Rollen 12c und den außenliegenden Rollen 12b, bzw. zwischen den innenliegenden Rollen 12c und den außenliegenden Gleitflächen 12a der Führungsbahn 10 geführt wird. Die Ebenen der Rollen 12b, bzw. 12, sowie der Normalen auf die Gleitflächen 12a sind, wie in den Figuren gezeigt, bevorzugt in einem Winkel angeordnet, der z.B. 35° beträgt, jedoch auch größer oder kleiner gewählt sein kann. Wie die Anmelderin gefunden hat, ergibt sich durch die Anordnung der Rollen/Gleitflächen 12a, 12b und 12c in einem Winkel von bevorzugt 35° gegenüber der Vertikalen der Vorteil, dass der Dorn 6 und die Wickelzunge 8 zum einen hinreichend vertikal unterstützt, und zum anderen seitlich stabil geführt werden, wenn der Innenfolienschlauch zwei über diese hinweggleitet.

Damit der Dorn 6 und die an dessen stromabwärtigem Ende befestigte Wickelzunge 8 in ihrer axialen und lateralen Position verbleiben und nicht durch abhebende Kräfte aus der Lagerung 12 gehoben werden, oder durch die auf die Zunge 8 und den Dorn 6 wirkenden Zugkräfte des Produktionsvorschubs in Längsrichtung verschoben werden, ist zumindest eine der zwei oder mehr Lagerungen 12, welche den Dorn 6 und die Zunge 8 sowie den darüber geführten Innenfolienschlauch 2 in der zuvor beschriebenen Weise tragen, bevorzugt als magnetische Haltevorrichtung (Magnethalterung) 14 ausgeführt, bzw. umfasst eine solche, auf die nachfolgend noch näher eingegangen wird.

Die Positionsstabilität des Dorns 6 innerhalb des Innenfolienschlauchs 2 während des Fertigungsprozesses wird bei dieser Ausführungsform erfindungsgemäß über magnetische Anziehungskräfte F realisiert. Hierzu kann im Dorn 6 ein Permanentmagnet 24 oder alternativ auch ein Bereich 26 aus einem magnetisierbaren, insbesondere ferromagnetischen Material, z.B. ein Metallblech, installiert sein, der durch die bevorzugt in diesem Bereich 26 aus einem nicht magnetisierbaren Werkstoff, insbesondere Kunststoff, bestehende Wandung des im Querschnitt bevorzugt kreisrunden Dorns 6 hindurch mit einem oder mehreren, bevorzugt in der ortsfesten Trageinrichtung 13 verbauten Elektromagneten 14a in magnetische Interaktion tritt, wie dies in Fig. 4b angedeutet ist. Der Dorn 6 kann hierzu beispielsweise vollständig aus Kunststoff bestehen, und z.B. durch 3D-Druck erzeugt werden. Die durch den wenigstens einen in oder an der ortsfesten Trageinrichtung 13 aufgenommenen Elektromagneten 14a und dem im Inneren des Innenfolienschlauchs 2 schwimmend aufgenommenen Dorn 6 wirkenden magnetischen Kräfte F sorgen bei der Aktivierung des Elektromagneten 14a dafür, dass der Dorn 6 mit der an dessen stromabwärtigem Ende befestigten Wickelzunge 8 in die an den ortsfesten Trageinrichtungen 13 aufgenommenen Lager 12 der Führungsbahn 10, d.h. gegen die Gleitflächen 12a und Rollen 12b, gezogen werden. Hierdurch werden die beim Wickelvorgang durch das Abrollen der harzgetränkten Faserbänder 4a um die Wickelzunge 8 herum erzeugten Kräfte über den Dorn 6 in die ortsfeste Trageinrichtung 13 , d.h. z.B. die Ständer abgeleitet.

Durch die zuvor beschriebene magnetische Haltevorrichtung 14, bei der im Inneren des Dorns 6 bevorzugt ausschließlich Permanentmagnete 24 zum Einsatz gelangen, wird das Abheben des Dorns 6 aus der Lagerung 12 der Führungsbahn 10 auf einfache und kostengünstige Weise vollständig verhindert. Zudem ist eine Verlagerung des Dorns 6 in Längsrichtung nur noch in einem sehr geringen Ausmaß möglich. Der Transport des Innenfolienschlauches 2 von der Rollenhalterung/Abrollvorrichtung 16 bis zum gewickelten Endprodukt kann in vorteilhafter Weise über der magnetisch gehaltenen und arretierten Wickelzunge 6 endlos erfolgen. Hierbei gleitet der Dorn 6 mit der daran angeordneten Wickelzunge 8 während der Herstellung des Auskleidungsschlauchs 1 fortlaufend durch den Innenraum des Innenfolienschlauchs 2 und wird durch die magnetischen Kräfte F zwischen dem außerhalb des Innenfolienschlauchs 2 angeordneten Magneten 14a der magnetischen Haltevorrichtung 14 und dem im Inneren des Dorns 6 angeordneten Permanentmagneten 24, bzw. Bereich 26 aus magnetisierbarem Material in seiner axialen Lage gehalten. Eine Limitierung besteht lediglich durch die Länge des zu einem Wickel 2' aufgerollten Innenfolienschlauches 2.

Wie in Fig. 4b angedeutet ist, ist der in oder an der ortsfesten Trageinrichtung 13 aufgenommene außenliegende Magnet, der mit dem oder den Permanentmagneten 24, bzw. dem Bereich 26 aus magnetisierbarem Werkstoff im Inneren des Dorns 6 zusammenwirkt, bevorzugt ein Elektromagnet 14a, der über eine lediglich schematisch angedeutete elektronische Steuerungsvorrichtung 26 in der Weise angesteuert wird, dass dieser mit einer mehr oder minder großen magnetischen Kraft F in axialer Richtung beaufschlagt wird und dadurch entgegen der Bewegungsrichtung des Innenfolienschlauchs 2 relativ zu diesem bewegt und dadurch gegenüber der Wickelvorrichtung 7 im Wesentlichen ortsfest positioniert wird. Hierdurch lässt sich die axiale Position des Dorns 6 im Inneren des Innenfolienschlauchs 2 während des Fertigungsprozesses verändern, um diesen z.B. bei einer Erhöhung der Abzugsgeschwindigkeit infolge der damit einhergehenden erhöhten Reibungskräfte, die durch den Innenfolienschlauch 2 auf den Dorn 6 ausgeübt werden, in die Gegenrichtung, d.h. in Richtung stromaufwärts, zu verschieben. Nach Ausschalten der Elektromagnete 24 können der Dorn 2 und die Wickelzunge 6 weiterhin in vorteilhafter Weise für Wartung und Umrüstung einfach bewegt, bzw. von der Lagerung 12 abgehoben werden.

Alternativ kann eine Positionskorrektur im Falle eines außen liegenden Elektromagneten 24 oder auch Permanentmagneten ebenfalls durch ein Verschieben des Magneten 24 in der zugehörigen ortsfesten Trageinrichtung 13 parallel zur Längsachse des Dorns und/oder in Querrichtung zu dieser erfolgen, was z.B. mit Hilfe einer nicht näher gezeigten Führungsschiene und einer Klemmeinrichtung auch rein mechanisch, bzw. manuell erfolgen kann. Eine solche kann z.B. zwischen zwei Ständern oder Auflagern der Trageinrichtung 13 unterhalb oder auch oberhalb des Dorns 6 angeordnet sein. In diesem Falle kann der äußere Magnet ebenfalls auch als Permanentmagnet ausgeführt sein.

Um die Zugkräfte zu minimieren und den fertigen Auskleidungsschlauch 1 zu schonen, kann es weiterhin vorgesehen sein, dass am Ende der Wickelzunge 8 eine oder mehrere Rollen 9a, insbesondere Kugellager, drehbar angeordnet sind, die sich bevorzugt entlang einer Reihe nebeneinander, bevorzugt über die gesamte Breite der Wickelzunge 8 hinweg erstrecken, wie dies in Fig. 3 angedeutet ist. Diese Rollen 9a an der Wickelzunge 8 können wie in Fig. 3 gezeigt, mit Rollen 9b zusammenwirken, welche gegen die Rollen 9a, bzw. die Außenseite der Wickelzunge 8 mit dem darüber geführten Innenfolienschlauch 2 angestellt werden können. Dabei wird der Innenfolienschlauch 2 bei der Durchführung des erfindungsgemäßen Verfahrens, wie in Fig. 3 gezeigt, zwischen den Rollen 9a, 9b hindurchgezogen, um den Innenfolienschlauch 2 mit der darauf gewickelten Faserbandlage 4 und dem Außenfolienschlauch 5 beim Verlassen der Wickelzungen 8 sauber und faltenfrei zu führen. Durch den Einsatz der zuvor beschriebenen Rollen 9a und 9b wird weiterhin der Vorteil erhalten, dass die Wickelzunge 8 und der daran befestigte Dorn 6 in axialer Richtung bevorzugt zusätzlich zu den in axialer Richtung wirkenden magnetischen Haltekräften fixiert werden.

Mitunter ist es auch denkbar, dass der Dorn 6 und die daran befestigte Wickelzunge 8 allein durch die Rollen 9a an der Wickelzungen 8 und die mit diesen und dem sich konisch erweiternden Abschnitt der Wickelzunge 8 durch den Innenfolienschlauch 2 und die aufgewickelten Faserbandlage 4 sowie ggf. den Außenfolienschlauch hindurch formschlüssig zusammenwirkenden außenliegenden Rollen 9b in ihrer axialen Position gehalten werden, ohne dass eine Magnethalterung zum Einsatz gelangt. Hierzu können die außenliegenden Rollen 9b an motorisch verschwenkbaren Hebeln angeordnet sein, wie dies in Fig. 3 angedeutet ist.

Der bevorzugt zu einem Wickel 2` aufgerollte vorgefertigte Innenfolienschlauch 2, der in einer in Fig. 1 gezeigten, als Rollenhalterung bezeichneten Abrolleinrichtung 16 aufgenommen wird, ist außenseitig mit Filz/Vlies 3 kaschiert und innen als Folie mit einer Wandstärke von bevorzugt 0,4 bis 0,7mm oder auch mehr ausgeführt. Die Folie ist eine bekannte Mehrlagen-Verbundfolie, die bevorzugt eine zentrale Polyamid-Lage als Styrolbarriere sowie oberhalb und unterhalb derselben eine Polyethylen-Lage aufweist. Aufgrund der Wandstärke der Verbundfolie sowie auch der darauf aufkaschierten Vlies- bzw. Filzlage 3 besitzt der Innenfolienschlauch 2 schon eine gewisse Formstabilität und Eigensteifigkeit. Wie die Anmelderin gefunden hat, wird durch diese Formstabilität der Fertigungsprozess in vorteilhafter Weise erleichtert, obgleich sich der vorgefertigte Innenfolienschlauch 2 ohne Einschränkungen platzsparend zu einem Wickel 2' aufwickeln lässt. Satt eines mit Vlies oder Filz 3 kaschierten Innenfolienschlauchs 2 erlauben das zuvor beschriebene Verfahren und die zugehörige Vorrichtung jedoch ebenfalls die Verarbeitung von vorgefertigten herkömmlichen glattwandigen Innenfolienschläuchen 2, die nach dem Aushärten wieder aus dem Kanal entfernt werden.

Der in der zuvor beschriebenen Weise hergestellte, expandierte und insbesondere durch Bestrahlen mit einer nicht näher gezeigten UV-Strahlungsquelle oder durch Einleiten von Heißdampf oder Heißwasser ausgehärtete Auskleidungsschlauch 1 ist nachfolgend noch einmal in Fig. 5 dargestellt, wobei die Bezugsziffer 2 den Innenfolienschlauch, 3 die auf diesen aufkaschierte Vliesschicht, 4 die Faserbandlage mit den Faserbändern 4a, 5 den Außenfolienschlauch, und 30 einen optionalen zusätzlichen Außenschutz bezeichnen, der ergänzend zum Außenfolienschlauch 5 mit Hilfe von nicht näher dargestellten Formschultern um diesen herum angeordnet werden kann. Dieser besteht bevorzugt aus einem reißfesten Gewebe, ähnlich dem Material einer LKW-Plane, das an der Oberseite durch einen Überlappabschnitt 32, z.B. ein Klebeband oder einen aufgeklebten oder thermisch aufgeschweißten Folienstreifen, unter Bildung einer Sollrissstelle 34 verbunden wird.

### Bezugszeichenliste

- 1: Auskleidungsschlauch
- 2: Innenfolienschlauch
- 2`: Wickel
- 3: Vliesschicht
- 4: Faserbandlage
- 4a: Faserband
- 5: Außenfolienschlauch
- 6: Dorn
- 6a: Öffnungen in den Außenflächen des Dorns
- 6b: Außenwand des Dorns
- 7: Wickelvorrichtung
- 8: Wickelzunge
- 9a: weitere zusätzliche Rollen am stromabwärtigen Ende der Wickelzunge
- 9b: an die zusätzlichen Rollen an der Wickelzunge anstellbare externe Rollen
- 10: Führungsbahn
- 12: Lager/Lagerung der Führungsbahn
- 12a: Gleitflächen der Führungsbahn
- 12b: außen liegende Rollen der Führungsbahn
- 12c: im Inneren des Dorns angeordnete Rollen
- 13: Trageinrichtungen für die Führungsbahn
- 14: magnetische Haltevorrichtung
- 14a: Elektromagnet an der Außenseite des Dorns
- 16: Rollenhalterung/Abrollvorrichtung
- 20: Transportvorrichtung
- 24: Magnet im Dorn
- 26: Bereich aus magnetisierbarem Material
- 28: elektronische Steuerungsvorrichtung
- 30: Zusätzlicher Außenschutz (Schutzschlauch aus verstärktem Kunststoffgewebe)
- 32: Überlappungsabschnitt
- 34: Sollrissstelle
- 100: erfindungsgemäße Vorrichtung
- F: magnetische Kraft

## Patentansprüche

1. Verfahren zur Herstellung eines Auskleidungsschlauchs (1) mit einem integralen, bevorzugt mit Filz oder Vlies kaschierten, umfänglich geschlossenen Innenfolienschlauch (2) und einer darauf angeordneten, mit einem härtbaren Reaktionsharz getränkten Faserbandlage (4) zur Auskleidung von Kanälen und Druck- und/oder Trinkwasserleitungen, **gekennzeichnet durch** die folgenden Verfahrensschritte:
- Einführen eines Dorns (6) mit einer daran angeordneten Wickelzunge (8) in ein erstes vorlaufendes Ende des Innenfolienschlauchs (1),
- Anordnen des Dorns (6) mit dem diesen umgebenden Innenfolienschlauch (2) auf den Lagern (12), insbesondere Gleitflächen oder Rollen einer Führungsbahn (10) für den Innenfolienschlauch (2),
- Bewegen des Innenfolienschlauchs (2) mittels einer Transportvorrichtung (12) über den Dorn (6) und die Wickelzunge (8),
- Erzeugen einer magnetischen Kraft (F) zwischen dem im Inneren des Innenfolienschlauchs (2) angeordneten Dorn (6) und einer außerhalb des Innenfolienschlauchs (2) angeordneten magnetischen Haltevorrichtung (14), wobei die Haltevorrichtung (14) dazu eingerichtet ist, den Dorn (6) in einer axialen Position zu fixieren und/oder den Dorn (6) gegen die Lager (12), insbesondere die Gleitflächen und/oder Rollen der Führungsbahn (10( zu drängen, während der Innenfolienschlauch (2) über diesen hinweg bewegt wird, und
- überlappendes schraubenförmiges Umwickeln des fortlaufend über den Dorn (6) und die Wickelzunge (8) bewegten Innenfolienschlauchs (2) mit wenigstens einem harzgetränkten Faserband (4a).

2. Verfahren nach Anspruch 1,
**dadurch gekennzeichnet, dass**
der Vorschub des Innenfolienschlauchs (2) durch ein der Wickelzunge (8) nachgeordnetes motorisch angetriebenes Transportband (20) erfolgt.

3. Verfahren nach Anspruch 1 oder 2,
**dadurch gekennzeichnet, dass**
die Stärke und/oder Richtung der magnetischen Anziehungskraft zwischen der magnetischen Haltevorrichtung (14) und dem Dorn (6) veränderbar ist.

4. Verfahren nach einem der vorhergehenden Ansprüche,
**dadurch gekennzeichnet, dass**
der Innenfolienschlauch (2) als Wickel 2` bereitgestellt und von einer bevorzugt motorisch angetriebenen Abrollvorrichtung (16) zugeführt wird.

5. Verfahren nach einem der vorhergehenden Ansprüche,
**dadurch gekennzeichnet, dass**
der Innenfolienschlauch (2) am stromabwärtigen Ende der Wickelzunge (8) über eine oder mehrere im Inneren des Innenfolienschlauchs (2) an der Spitze der Wickelzunge (8), bevorzugt entlang einer Reihe angeordnete Rollen (9a) geführt ist.

6. Verfahren nach Anspruch 5,
**dadurch gekennzeichnet, dass**
im Bereich des Dorns (6) um die Außenseite der gewickelten Faserbandlage (4) herum ein bevorzugt lichtdichter Außenfolienschlauch (5), insbesondere durch fortlaufendes thermisches Verschweißen von bahnförmigem Folienmaterial, angeordnet wird.

7. Vorrichtung (100) zur Durchführung des Verfahrens nach einem der vorhergehenden Ansprüche, umfassend eine Führungsbahn (10) für einen umfänglich geschlossenen Innenfolienschlauch (2), die durch eine Vielzahl Lagern (12), insbesondere Gleitflächen oder Rollen, definiert ist, welche an ortsfesten, im Abstand zueinander angeordneten Trageinrichtungen (13) aufgenommen sind und die Führungsbahn (10) an ihrer Unterseite begrenzen, einen langgestreckten Dorn (6) mit wenigstens einem darin enthaltenden Magneten (24) oder Bereich aus magnetisierbarem Material (26) und eine am Dorn (6) befestigte Wickelzunge (8), die dazu eingerichtet sind, im Inneren des umfänglich geschlossenen Innenfolienschlauchs (2) aufgenommen zu werden, eine Transportvorrichtung (20), die dazu eingerichtet ist, den Innenfolienschlauch (2) über den Dorn (6) und die Wickelzunge (8) zu bewegen, eine nahe der Führungsbahn (10) angeordnete magnetische Haltevorrichtung (14), die dazu eingerichtet ist, den Dorn (6) mit einer magnetischen Haltekraft zu beaufschlagen, um diesen während der Bewegung des Innenfolienschlauchs (2) relativ zur Führungsbahn (10) im Wesentlichen ortsfest zu positionieren, und eine Wickelvorrichtung (7), die dazu eingerichtet ist, den Innenfolienschlauch (2) während seiner Bewegung mit wenigstens einem harzgetränkten Faserband (4a) überlappend zu umwickeln.

8. Vorrichtung nach Anspruch 7,
**dadurch gekennzeichnet, dass**
die magnetische Haltevorrichtung (14) wenigstens einen Elektromagneten (14a) umfasst, der an der Unterseite der Führungsbahn (10) zwischen zwei den Dorn (6) tragenden Lagern (12), insbesondere zwischen zwei Gleitflächen (12a) oder Rollen (12b), angeordnet ist, und der dazu eingerichtet ist, den Dorn (6) mit einer magnetischen Kraft zu beaufschlagen, welche diesen gegen die Lager (12) drängt.

9. Vorrichtung nach Anspruch 8,
**dadurch gekennzeichnet, dass**
die von dem wenigstens einen Elektromagneten (14a) erzeugte, auf den Dorn ausgeübte Magnetkraft durch eine elektronische Steuerungseinrichtung (28) in ihrer Stärke und/oder Richtung veränderbar ist.

10. Vorrichtung nach einem der Ansprüche 7 bis 9,
**dadurch gekennzeichnet, dass**
die Außenflächen des Dorns (6) oder der Wickelzunge (8), welche dazu eingerichtet sind, die Innenseite des Innenfolienschlauchs (2) zu kontaktieren, mit einem reibungsvermindernden Werkstoff, insbesondere Filz oder Kunststoff, belegt oder beschichtet sind, und/oder dass im Bereich der die Innenseite des Innenfolienschlauchs (2) kontaktierenden Außenflächen zusätzliche Rollen (12c) angeordnet sind, welche durch in der Außenwand (6b) des Dorns (6) geformte Öffnungen (6a) hindurchtreten.
